# EUROPEAN PATENT APPLICATION

(11) **EP 3 915 774 A1**
(43) Date of publication of application: **01.12.2021**
(21) Application number: 20382445.3
(22) Date of filing: 27.05.2020
(51) Int. Cl.: B32B 5/02, A41D 13/11, B32B 5/08, B32B 5/26, B32B 37/04, B32B 37/06, B32B 37/20

(54) **FABRIC FOR PRODUCING MASKS**

(71) Applicant: Textil Manly, S.A., 08150 Parets del Valles/Barcelona (ES)
(72) Inventor: Granada Gisbert, Laura, 08150 PARETS DEL VALLES / BARCELONA (ES); Granada Gisbert, Alex, 08150 PARETS DEL VALLES / BARCELONA (ES)
(74) Representative: Maldonado Jordan, Julia

(57) **Abstract**

Fabric for producing masks, comprising: an intermediate layer (11) of nonwoven fabric made of polyamide (PA) and polyester (PES), arranged between two external layers (12, 13) of fabric, with weft and warp, made of polyester (PES), the intermediate layer (11) and end layers (12, 13) being joined together forming a single layer of fabric (1). The intermediate layer (11) comprises between 50 % and 80 % polyamide (PA) and between 50 % and 20 % polyester (PES), and a grammage comprised between 35 and 45 gr/m2; and the external layers (12, 13) are 100 % polyester (PES), and a grammage comprised between 40 and 50 gr/m2.

## Description

### Technical field.

The present invention relates to a fabric for producing masks, which has technical features aimed at providing a high capacity for filtering viruses and bacteria, and a low differential pressure which makes it easier for the user to breathe through the same.

### Prior state of the art

Masks are used in different sectors to protect the user's respiratory system from viruses, bacteria and contaminating agents, solid or liquid, suspended in the air.

Currently, different types of masks are known on the market, which can be grouped into two large groups: flat folded masks and moulded cup-shaped masks, being able to incorporate additional elements such as filters or exhalation valves.

Very different materials are used to produce these masks, it being necessary to overlap several layers of materials, usually non-woven fabric, and eventually, apply additives to improve the filtration capacity thereof, the resistance to moisture thereof or other specific properties which enable the protection provided by the mask to be improved. The handling of the different layers of material complicates the production of the mask.

Moreover, the overlapping of several layers of materials intended to provide protection against viruses, bacteria and biological agents has the disadvantage that by increasing the filtration capacity with the assembly of the layers, the capacity of air passing through them is considerably reduced, making it difficult for the user to breathe.

Another additional drawback is that non-woven fabric materials, commonly used in the production of masks, either cannot withstand the disinfection thereof by means of hot washing, for which reason only non-reusable masks can be produced, or they lose a significant part of the original bacterial filtration efficiency after a small number of washes.

The applicant is unaware of the existence of a fabric for producing masks which has the features of the fabric object of the invention and which enables the aforementioned drawbacks to be solved.

### Description of the invention

The fabric for producing masks, object of this invention, has some technical features aimed to enable said production with a layer of the fabric in question, making handling, overlapping and fastening several layers of different materials unnecessary, and to achieve a high capacity for filtering viruses and bacteria, and a low differential pressure, which makes it easier for the user to breathe through the fabric of the mask.

The fabric of the invention comprises: an intermediate layer of non-woven fabric made of polyamide (PA) and polyester (PES), arranged between two external layers of fabric, with weft and warp, made of polyester (PES), the three layers being joined together, forming a single layer of fabric suitable for producing masks, without needing to overlap other layers of different materials, which greatly simplifies the production of masks.

With the aforementioned layers joined in the arrangement indicated and the combination of the materials used in each of them, the fabric of the invention has a bacterial filtration efficiency greater than 90 %, and a differential pressure less than 20 Pa/cm², for which reason the user can breathe comfortably through the masks made with the fabric of the invention, without feeling a choking sensation.

According to the invention, the intermediate layer of non-woven fabric comprises between 50 % and 80 % polyamide (PA) and between 50 % and 20 % polyester (PES), and a grammage comprised between 35 and 45 gr/m²; and the external layers, made of weft and warp fabric, are 100 % polyester (PES), and a grammage comprised between 40 and 50 gr/m².

Through studies and tests performed during the development of the fabric of the invention, it has been confirmed that the values indicated provide optimal results for producing masks, maximising the bacterial filtration efficiency and minimising the differential pressure of the fabric.

The joining of the intermediate layer and the external layers by hot calendering causes said layers to be joined into a single layer of fabric, which ensures the duration and stability of said fabric, even after successive washes with hot water for the disinfection thereof.

An additional feature of this fabric is that it is suitable for sublimation printing, with the advantages that this implies, among others: it enables a very wide range of colours to be obtained, or the printing is integrated into the fabric, forming part of the same.

### Brief description of the content of the drawings.

To complement the description that is being made and for the purpose of helping to facilitate the understanding of the features of the invention, a set of drawings is attached to the present specification in which the following is shown with an illustrative and non-limiting character:

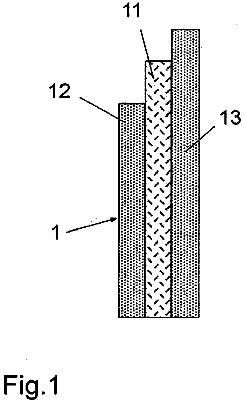

- Figure 1 shows a stepped cross section of a portion of the fabric for producing masks, according to the invention, wherein the different component layers thereof joined together can be seen, forming a layer of said fabric.

### Detailed explanation of embodiments of the invention.

As shown in Figure 1, the fabric (1) for producing masks comprises: an intermediate layer (11) of non-woven fabric made of polyamide (PA) and polyester (PES), arranged between two external layers (12, 13) of fabric, with weft and warp, made of polyester (PES).

The intermediate layer (11) and the external layers (12, 13) are joined together forming a single layer of fabric (1), wherein the external layers (12, 13) form the opposite surfaces or faces of the fabric (1).

The intermediate layer (11) of non-woven fabric comprises between 50 % and 80 % polyamide (PA) and between 50 % and 20 % polyester (PES), and a grammage comprised between 35 and 45 gr/m².

Preferably, the intermediate layer (11) comprises 50 % polyamide (PA) and 50 % polyester and has a grammage of about 40 gr/m², reaching with said parameters a bacterial filtration efficiency greater than 90 %, and more specifically around 94 %.

The external layers (12, 13) of fabric, with weft and warp, are 100 % polyester (PES), and a grammage comprised between 40 and 50 gr/m², and preferably about 43 gr/m², which is suitable for providing the body (1) with protection against abrasion, enabling the differential pressure to be maintained below 20 Pa/cm², and more specifically about 18 Pa/cm².

The intermediate layer (11) and the external layers (12, 13) are joined together by hot calendering, which provides a solid joining thereof, the layer of fabric (1) maintaining the integrity thereof and a bacterial filtration capacity greater than 90 % after several washes at a suitable temperature, of about 60 °C, for the disinfection thereof.

Having sufficiently described the nature of the invention, as well as a preferred exemplary embodiment, it is hereby stated for pertinent purposes that the materials, shape, size and arrangement of the described elements will be able to be modified, so long as this does not imply an alteration of the essential features of the invention which are claimed below.

## Claims

1. A fabric for producing masks, **characterised in that** said fabric (1) comprises: an intermediate layer (11) of non-woven fabric made of polyamide (PA) and polyester (PES), arranged between two external layers (12, 13) of fabric, with weft and warp, made of polyester (PES), the intermediate layers (11) and the end layers (12, 13) being joined together, forming a single layer of fabric (1).

2. The fabric, according to claim 1, **characterised in that** the intermediate layer (11) of non-woven fabric comprises between 50 % and 80 % polyamide (PA) and between 50 % and 20 % polyester (PES), and a grammage comprised between 35 and 45 gr/m².

3. The fabric, according to any one of the preceding claims, **characterised in that** the external layers (12, 13), made of weft and warp fabric, are 100 % polyester (PES), and a grammage comprised between 40 and 50 gr/m².

4. The fabric, according to any one of the preceding claims; **characterised in that** the intermediate layer (11) and the external layers (12, 13) are joined together by hot calendering.
